# EUROPEAN PATENT SPECIFICATION

(11) **EP 2 082 927 B1**
(45) Date of publication and mention of the grant of the patent: **28.07.2010**
(21) Application number: 09004590.7
(22) Date of filing: 24.10.2007
(51) Int. Cl.: B60R 25/00, G07C 9/00

(54) **Passive keyless entry system**
Passives, schlüsselloses Zugangssystem
Système passif d'entrée sans clé

(30) Priority: 27.10.2006 JP 2006292681
(43) Date of publication of application: 29.07.2009
(62) Divisional of application: 07020816.0
(73) Proprietor: ALPS ELECTRIC CO., LTD., Tokyo 145-8501 (JP)
(72) Inventor: Nagaoka, Shuichi, Ota-ku Tokyo 145-8501 (JP); Sampei, Yoshio, Ota-ku Tokyo 145-8501 (JP); Takahashi, Jun, Ota-ku Tokyo 145-8501 (JP)
(74) Representative: Klunker . Schmitt-Nilson . Hirsch

(56) References cited:
- JP-A- 11 107 592
- US-A1- 2001 026 213
- US-A1- 2004 100 392

## Description

### BACKGROUND OF THE INVENTION

### 1. Field of the Invention

The present invention relates to a passive keyless entry system that performs wireless communication between a portable device and a vehicle-side device to automatically lock and unlock doors, etc, and more specifically, to a passive keyless entry system that can prolong the lifespan of a battery in the portable device.

### 2. Description of the Related Art

In a passive keyless entry system, a vehicle-side device is provided in a vehicle, such as an automobile, to perform wireless communication with a portable device carried by a driver, and if authentication is established, doors are locked and unlocked. Further, a plurality of portable devices is prepared for one vehicle. Of them, automatic unlocking of doors is performed in a case where a portable device enters a predetermined region on the basis of a vehicle. This assumes a case where a user carrying the portable device approaches the vehicle. Further, automatic locking of doors is performed in a case where a portable device comes out of a predetermined region a predetermined distance away from the vehicle. This assumes a case where a user carrying the portable device moves away from the vehicle.

Meanwhile, in order to detect, on the vehicle side, whether the portable device is in a predetermined region, communication between the vehicle-side device and the portable device is performed at a predetermined time period. In this case, request signals are transmitted at predetermined time intervals from the vehicle-side device. If the portable device is located in a predetermined region, it receives a request signal. The portable device that has received the signal transmits an answer signal including information on an ID unique to each portable device. On the vehicle-side device, the answer signal is received and authentication is performed. Further, if the portable device is not located in a predetermined region, a request signal cannot be received, and an answer signal is not transmitted, either. Accordingly, on the vehicle side, whether or not a predetermined portable device is located in a predetermined region can be determined by success or failure of authentication, and whether the portable device has come out of a predetermined region, or has entered the predetermined region can be determined by performing the communication intermittently.

Here, if a portable device is located within a predetermined range, and the period of transmission of request signals transmitted from the vehicle-side device is short, the intervals at which answer signals from the portable device are sent back also become short. As a result, since the electric power for transmission of answer signals is needed much, consumption of a battery of the portable device will be expedited. On the contrary, if the period of transmission of request signals are lengthened, the response time until locking is performed becomes long, and degradation of performance is brought about, when the portable device separates away from the vehicle. Therefore, the period cannot be lengthened much.

In addition, a passive keyless entry system that changes over the period of intermittent transmission of request signals is also well-known. For example, there is one cited in JP-A-2003-253938. In this passive keyless entry system, when a signal from a portable device has changed from a non-receiving state to a receiving state in a vehicle-side device, request signals are transmitted at a second intermittent period that is set to be shorter than a first intermittent period that is an intermittent period of normal request signals, and when the vehicle-side device has received answer signals corresponding to all transmission signals, locking is performed. Thereby, even if a user frequently enters or exits a predetermined region, locking or unlocking is not performed at every such entrance or exit.

However, even in the passive keyless entry system cited in JP-A-2003-253938, when the intermittent period of request signals is long, there is a problem that the response time becomes long. That is, assuming a case where a period is shortened upon starting reception of an answer signal at a vehicle, and a portable device enters a predetermined area immediately after there is no portable device in the predetermined area at a point of time when a request signal is transmitted, the portable device cannot be detected only with the next transmission timing. Thus, there is a problem that the response time becomes long.

US 2004/100392 A1 shows a process related to a vehicle equipped with a hands-free access system in which the vehicle is equipped with short-range antennas intended to send a signal to a tag. The latter is furnished on the one hand with a receiver for receiving the signals sent by the antennas of the vehicle and on the other hand a transmitter of longer range than the transmitting antennas of the vehicle so as to transmit signals in response to signals received from the vehicle. The locking of the vehicle is instructed when on the one hand the doors of the vehicle to be locked are closed and when on the other hand the vehicle receives from the tag a signal containing a cue indicating that the level of reception by the tag of the signals transmitted by the vehicle is low or zero, at least one signal sent previously by the vehicle having been received with a normal level of reception.

### SUMMARY OF THE INVENTION

The invention has been made in view of the above problems. It is therefore an object of the invention to provide a passive keyless entry system that makes it possible to prolong the lifespan of a battery of a portable device while suppressing degradation of performance, when communication is performed at a predetermined time period between a vehicle-side device and the portable device.

In order to solve the above problem, a passive keyless entry system which is not part of the claimed invention is a passive keyless entry system transmitting a request signal at a predetermined time period from a vehicle-side device provided in a vehicle, transmitting an answer signal if a portable device has received the request signal, and including a control unit that performs predetermined control when the answer signal is received or not received by the vehicle-side device. Here, the portable device includes a portable device control unit that detects the intensity of the request signal transmitted from the vehicle-side device. The portable device control unit or the control unit of the vehicle is adapted such that, if the intensity of the request signal has become an intensity that has changed by a predetermined value or more compared with the intensity of a previously received request signal, a normal answer signal is transmitted as the answer signal by the control unit of the portable device, and that, if the intensity of the request signal has changed by less than a predetermined value, a simple answer signal that is shorter than the normal answer signal is transmitted as the answer signal by the control unit of the portable device.

Further, a passive keyless entry system according which is not part of the claimed invention is a passive keyless entry system transmitting a request signal at a predetermined time period from a vehicle-side device provided in a vehicle, transmitting an answer signal if a portable device has received the request signal, and including a control unit that performs predetermined control when the answer signal is received or not received by the vehicle-side device. Here, the portable device includes a portable device control unit that detects the intensity of the request signal transmitted from the vehicle-side device. The portable device control unit or the control unit of the vehicle is adapted such that, if the intensity of the request signal has become an intensity that has changed by more than a predetermined value compared with the intensity of a previously received request signal, a normal answer signal is transmitted as the answer signal by the control unit of the portable device, and that, if the intensity of the request signal has changed by a predetermined value or less, a simple answer signal that is shorter than the normal answer signal is transmitted as the answer signal by the control unit of the portable device.

Further, the passive keyless entry system according to an aspect of the invention is a passive keyless entry system transmitting a request signal at a predetermined time period from a vehicle-side device provided in a vehicle, transmitting an answer signal in a predetermined case when a portable device has received the request signal, and comprising a control unit that performs predetermined control if the answer signal is received or not received by the vehicle-side device. Here, the portable device includes a portable device control unit that detects the intensity of the request signal transmitted from the vehicle-side device. The portable device control unit or the control unit of the vehicle is adapted to transmit a normal answer signal as the answer signal once for every predetermined number of times of reception of the request signal, if a distance from the vehicle detected on the basis of the request signal is a predetermined value or less, or less than a predetermined value.

Moreover, in the passive keyless entry system according to the aspect of the invention, the portable device control unit does not transmit the answer signal at any times other than when the normal answer signal is transmitted, upon reception of the request signal.

Moreover, in the passive keyless entry system according to the aspect of the invention, the portable device control unit transmits a simple answer signal, which is shorter than the normal answer signal, as the answer signal at any times other than when the normal answer signal is transmitted, upon reception of the request signal.

Moreover, in the passive keyless entry system according to the aspect of the invention, if a distance from the vehicle detected on the basis of the request signal is a predetermined value or more, or is more than a predetermined value, the portable device control unit immediately transmits a signal including information on such content.

According to the passive keyless entry system not related to the invention, the portable device control unit or the control unit of the vehicle is adapted such that, if the intensity of a request signal detected on the basis of a request signal has changed by a predetermined value or more compared with the intensity of a previously received request signal, a normal answer signal is transmitted as the answer signal, and that, if the intensity of the request signal has changed by less than a predetermined value, a simple answer signal that is shorter than the normal answer signal is transmitted as the answer signal. As a result, if the portable device is not moved but stayed in the vicinity of the vehicle, a simple answer signal that that is shorter than a normal answer signal and has little power consumption required for transmission is transmitted. Thus, even if the number of times of communication increases, consumption of a battery of the portable device can be suppressed. And existence of the portable device can be confirmed by the vehicle-side device at any times when a simple answer signal is transmitted. On the other hand, if an answer signal is sent back to a request signal each time and the portable device has been moved by a predetermined distance or more, a normal answer signal is transmitted. Thereby, power consumption is suppressed and lowering of responsiveness can also be prevented.

Further, according to the passive keyless entry system related to the invention, the portable device control unit is adapted to transmit a normal answer signal as the answer signal once for every predetermined number of times of reception of the request signal, if a distance from the vehicle detected on the basis of the request signal is within a predetermined value. Thereby, the electric power in the portable device for transmitting an answer signal can be reduced, and consumption of a battery can be suppressed.

Further, according to the passive keyless entry system related to the invention, the portable device control unit does not transmit the answer signal at any times other than when the normal answer signal is transmitted, upon reception of the request signal. Thereby, the electric power in the portable device for transmitting an answer signal can be reduced, and consumption of a battery can be suppressed.

Furthermore, according to the passive keyless entry system related to the invention, the portable device control unit transmits a simple answer signal, which is shorter than the normal answer signal, as the answer signal at any times other than when the normal answer signal is transmitted, upon reception of the request signal. Thereby, since a signal is transmitted to the vehicle-side device even while any normal answer signal is not transmitted, responsiveness can be ensured.

Also, according to the passive keyless entry system related to the invention, if a distance from the vehicle detected on the basis of the request signal is a predetermined value or more, or is more than a predetermined value, the portable device control unit immediately transmits a signal including information on such content. Thereby, even if the intervals at which normal answer signals are transmitted as answer signals from the portable device becomes long, if the portable device is a predetermined distance away from the vehicle, locking can be made immediately and excellent responsiveness can also be ensured.

### BRIEF DESCRIPTION OF THE DRAWINGS

Fig. 1 is a schematic diagram of a passive keyless entry system in the present embodiment;
Fig. 2 is a block diagram of the passive keyless entry system in the present embodiment;
Fig. 3 is a flow chart of a portable device which is not part of the claimed invention and that has received a request signal; and
Fig. 4 is a flow chart of the portable device that has received a request signal in an embodiment of the invenntion.

### DESCRIPTION OF THE PREFERRED EMBODIMENT

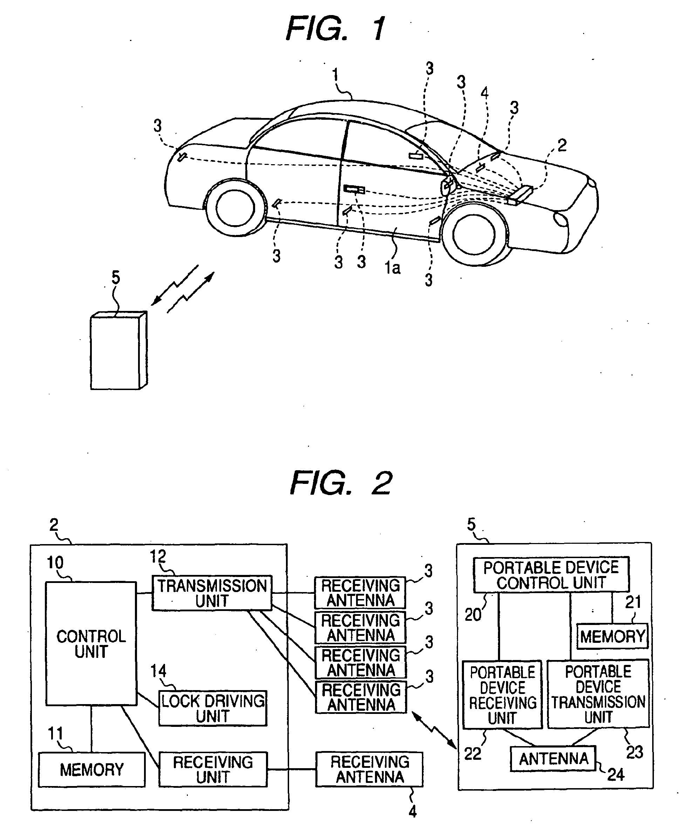

An Embodiment of the invention will be described in detail with reference to the drawings. A schematic diagram of a passive keyless entry system in the present embodiment is shown in Fig. 1. As shown in this drawing, the passive keyless entry system in the present embodiment is made up of a vehicle-side device 2 provided in a vehicle 1 having a door 1a, transmission antennas 3 that are connected to the vehicle-side device 2 and arranged in various places of the vehicle 1, a receiving antenna 4 that is connected to the vehicle-side device 2 and arranged in the vehicle 1, and a portable device 5 that is carried by a user. Further, this passive keyless entry system has a function to perform wireless communication between the portable device 5 and the vehicle-side device 2, and to perform locking or unlocking of the door 1a, as a user approaches the vehicle 1 or moves away from the vehicle 1 in a state where the user carries the portable device 5.

In the present embodiment, the configuration and operation for locking the door 1a when a user moves away from the vehicle 1 in a state where the user carries the portable device 5 will be particularly describe below. In this case, a request signal is transmitted at predetermined time intervals from the vehicle-side device 2, the portable device 5 that has received the request signal transmits a predetermined answer signal to the vehicle-side device, and the vehicle-side device 2 that has received the answer signal performs predetermined control on the basis of the answer signal.

A plurality of portable devices 5 are prepared for one vehicle 1, and a unique identification code of, for example, 32 bits is given to each of the portable devices 5. By including an identification code unique to a portable device 5 in an answer signal from the portable device 5, in the vehicle-side device 2, the portable device 5 is authenticated, and with which portable device 5 the vehicle-side device is communicating can be identified. As such, an answer signal from a portable device 5, including an identification code unique to every portable device 5, is hereinafter referred to as a normal answer signal.

On the other hand, for example, a 4-bit unique identification code is also given to the vehicle 1, and by including an identification code unique to the vehicle 1 in an answer signal from each of the portable devices 5, whether a signal from the portable device 5 for the vehicle 1 is can be recognized in the vehicle-side device 2. An identification code unique to the vehicle 1 is made up of a smaller amount of information than an identification code unique to a portable device 5. For this reason, a signal from the portable device 5 that includes the identification code unique to the vehicle 1 is shorter than a normal answer signal. This answer signal is hereinafter referred to as a simple answer signal.

A plurality of the transmission antennas 3 are provided inside and outside the vehicle 1, respectively, and the antennas are provided so that the signal access ranges thereof may overlap each other in the vicinity of the vehicle. When a request signal is transmitted, signals are transmitted continuously so that transmission periods from all the transmission antennas 3 may not overlap each other. Thereafter, signals are transmitted in a similar fashion at predetermined intervals, and this is repeated.

A block diagram of the passive keyless entry system in the present embodiment is shown in Fig. 2. As shown in this drawing, the vehicle-side device 2 includes a control unit 10 that controls each unit, a memory 11 that stores an identification code, etc., a transmission unit 12 that transmits an electric wave to each of the transmission antennas 3, a receiving unit 13 that outputs an electric wave received by the receiving antenna 4 to the control unit 10, and a lock driving unit 14 that performs locking or unlocking operation of the door la.

The portable device 5 includes a portable device control unit 20 that performs various kinds of control when it has received a request signal from the vehicle-side device 2, and a portable device receiving unit 21 that receives a request signal, a portable device transmission unit 22 that transmits an answer signal to the vehicle-side device 2, and a memory 23 that stores an identification code, etc. Further, an antenna 24 that transmits and receives a signal is connected to the portable device receiving unit 21 and the portable device transmission unit 22.

The portable device control unit 20 can calculate the distance from the portable device to the vehicle 1 on the basis of the intensity of a request signal received from each of the antennas 3, in the portable device receiving unit 21. Since the request signal is transmitted at predetermined time intervals as mentioned above, the portable device control unit 20 can compare the distance from the vehicle 1 calculated from a previous request signal, with the distance from the vehicle 1 calculated from a request signal received before the previous request signal, thereby detecting how the position of the portable device to the vehicle 1 5 has been changed. Specifically, the portable device stores in the memory 21 the received intensity data and at what times of reception the received data is until the device completes transmission of request signals from all the antennas after receiving a first signal. Data is also stored in a signal received after the predetermined time interval has lapsed, similarly to the above. Also, since signals received in individual order are considered to be signals from the same antenna, how the position of the portable device 5 to the vehicle 1 has been changed can be detected by comparing the signals of the individual order.

In an embodiment, which is not part of the claimed invention, the portable device control unit 20 changes the content of an answer signal according to the variation of the distance of the portable device 5 to the vehicle 1 detected on the basis of the intensity of a received request signal. If the change of the distance of the portable device 5 to the vehicle 1 is a predetermined value or more, it is determined that the portable device 5 is moving largely, and a normal answer signal including an identification code unique to the portable device 5 is transmitted as an answer signal. On the other hand, if the change of the distance of the portable device to the vehicle 1 is less than a predetermined value, it is determined that the portable device 5 is hardly moving, and a simple answer signal that is shorter than a normal answer signal is transmitted as an answer signal. In addition, if the change is more than a predetermined value, it is determines that the portable device has moved largely, and if the change is equal to or smaller than a predetermined value, it is determined that the portable device is hardly moving.

Further, as a method for determination, which is not part of the claimed invention, it is determined whether or not the maximum value of differences of the values of the intensity in predetermined order is a predetermined value or more. This corresponds to the maximum value of a change of the distance from an antenna 3. This is obtained in order to determine whether or not a portable device has moved largely. However, the invention is not limited thereto. For example, a sum may be taken by squaring a mean value of differences of the intensity data of individual order, or differences between the intensity data, the square root of this sum may be taken, etc.

Further, in the present embodiment, an antenna is identified according to a signal that is first received, and the order of signals received after the first signal. However, the data showing each transmission antenna may be given to a request signal so that the antenna may be identified by referring to the data.

Moreover, the portable device control unit 20 sends only the distance data from each antenna 3 detected on the basis of the intensity of a received request signal, back to the vehicle-side device 2 whenever request signals are received. That is, whenever the portable device 20 receives request signals transmitted from each antenna, it detects intensity data, and immediately sends the data back and simultaneously stores it in a memory. Then, when one period of reception of the request signals is completed, the movement state of the portable device is determined using the data stored in the memory. If it is determined that the portable device has moved largely, a signal including an identification code of the portable device is transmitted, and if it is determined that the portable device is hardly moving, a simple answer signal is transmitted. In addition, the sending-back of the intensity data is used to detect the position of the portable device 5 as will be described later, and the intensity data is still fewer data compared with a simple answer signal in amount of information.

The control unit 10 of the vehicle-side device 2 authenticates the portable device 5 with reference to the memory 11, if a normal answer signal is received as an answer signal. Further, it is determined whether or not the portable device 5 is inside or outside a borderline that is a predetermined distance away from the vehicle 1 on the basis of the information on the signal intensity received from the portable device 5. More specifically, since the transmission timing of a request signal from an antenna 3 is controlled by the control unit 10, and the portable device 5 sends back the intensity data immediately after it has received the request signal. Thus, whether the intensity data sent back from the portable device 5 corresponds to a certain antenna 3 can be determined in the control unit 10. Consequently, the distance between the portable device and each of the antennas can be obtained from the intensity data by the control unit 10. From these, the absolute position of the portable device to the vehicle is obtained, and whether this position is inside or outside a borderline is determined. In addition, in order perform this more accurately, the determination can also be made in the following way. A number of pieces of information on the signal intensity from each transmission antenna 3 to be detected by a portable device 5 inside and outside a borderline in advance are collected, each data group is prepared for each antenna, whether the information on the signal intensity that has actually been received by the portable device 5 is approximate to either a data group inside the borderline or a data group outside the borderline is determined using a statistical technique, and thereby it is determined whether the portable device 5 is inside or outside the borderline. As the statistical technique in this case, for example, a technique of calculating the Mahalanobis distance between the data from the portable device 5 and each data group, and contrasting whether the distance is approximate to any data group can be used.

Here, if the control unit 10 has determined that the portable device 5 has moved from a state where the portable device is inside a borderline that is a predetermined distance away from the vehicle 1 to the outside of the borderline in a state where the authentication code of the portable device is authenticated, the control unit considers that the portable device 5 is kept away from the vehicle 1, and controls to make the lock driving unit 14 lock the door 1a. Further, even if the authentication code of the vehicle is authenticated from a state where the portable device is inside a borderline and the authentication code of a portable device is authenticated, or authentication of the authentication code of a portable device is stopped due to communication stop, etc., similarly, the control unit controls to make the lock driving unit 14 lock the door 1a. On the other hand, if it is determined that the portable device 5 is inside a borderline that is a predetermined distance away from the vehicle 1 and a signal including the authentication code of the portable device or the authentication code of the vehicle is received, locking of the door 1a is not performed, and transmission of intermittent request signals is continued. In addition, the start of transmission of a request signal in the case of alighting is performed, on condition that an engine is stopped, doors are closed, and door locking is not performed.

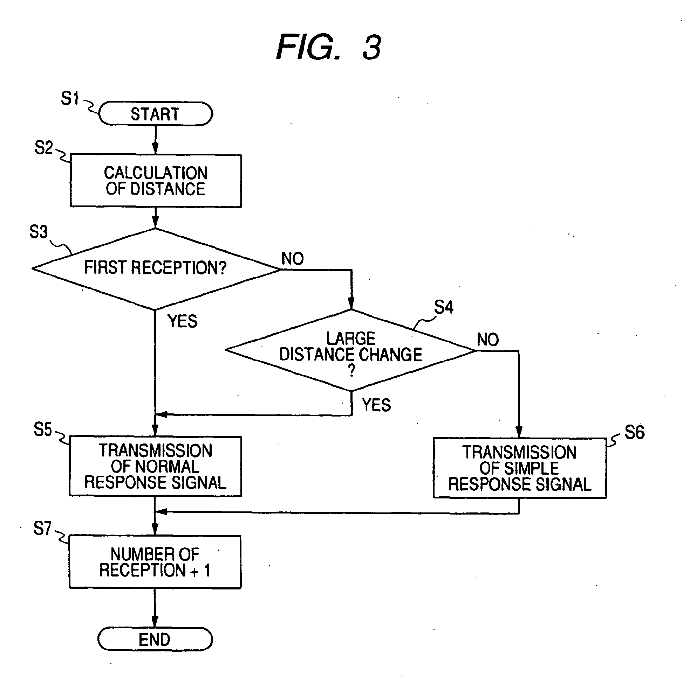

A flow about whether the portable device 5 transmits a normal answer signal or transmits a simple answer signal, as an answer signal, will be described below in detail. A flow chart in the portable device 5, which is not part of the claimed invention, is shown in Fig. 3. This flow chart begins from a point of time (S1) when the portable device 5 has received a request signal from the vehicle-side device 2. If a request signal is received, the portable device control unit 20 calculates a distance from the vehicle 1 on the basis of the intensity of the request signal (S2).

Subsequently, the portable device control unit 20 determines whether or not the received request signal is a signal that is first received (S3). The history of reception by the portable device 5 is stored in the memory 21, and the portable device control unit 20 can recognize what times of reception a request signal is by referring to the memory. If the received request signal is a signal that is first received, the portable device control unit 20 transmits a normal answer signal to the portable device transmission unit 22 as an answer signal (S5).

If the received request signal is a signal that is received at second or succeeding times, the portable device control unit 20, as mentioned above, compares the intensity of a request signal that is received at a first time, with the intensity of a request signal that is received this time (S4). Then, if the change between the signals is a predetermined value or more, or is more than a predetermined value, it is determined that the portable device 5 is moving largely, and a normal answer signal is transmitted to the portable device transmission unit 22 as an answer signal (S5). If the vehicle-side device 2 has received a normal answer signal, the control unit 10 performs authentication according to an identification code unique to the portable device 5, and determines whether the portable device 5 is inside or outside a borderline set in a position that is a predetermined distance away from the vehicle 1 in a way as mentioned above. If the authentication is established, and it is determined that the portable device is located outside from the inside of the borderline, or if the portable device is inside the borderline, and the authentication is established, and then the portable device is located outside the borderline and the authentication is not established, the control unit performs control of making the lock driving unit 14 lock the door 1a. On the other hand, when the change of the distance is less than a predetermined value or a predetermined value or less, the portable device control unit 20 determines that the portable device 5 is hardly moving, and transmits a simple answer signal to the portable device transmission unit 22 as an answer signal (S6). When the answer signal has been transmitted, the portable device control unit 20 adds one to the number of times of reception stored in the memory 21, and makes the result stored in the memory (S7).

In addition, comparison of the intensity is not limited to that using the intensity based on a request signal that is received one time ago. For example, if time intervals at which request signals are transmitted are short, comparison with the intensity based on a request signal that is received two or more times ago can be made, or a mean value of intensities based on request signals that are received over several times can also compared with a distance that is detected this time.

Whenever the portable device control unit 20 receives request signals from the vehicle-side device 2, the control unit executes this flow, and transmits a normal answer signal or a simple answer signal according to the change of the distance between the portable device 5 and the vehicle 1. Accordingly, if the portable device 5 is not moved but stayed in the vicinity of the vehicle 1, a simple answer signal that that is shorter than a normal answer signal and has little power consumption required for transmission is transmitted. Thus, even if the number of times of communication increases, consumption of a battery of the portable device 5 can be suppressed. On the other hand, if an answer signal is sent back to a request signal each time and the portable device 5 has been moved by a predetermined distance or more, a normal answer signal is transmitted to perform authentication. Thus, power consumption is suppressed and lowering of responsiveness can also be further prevented. In addition, in the present embodiment, if the portable device has moves to the outside of a boundary region from a vehicle at slow speed, the identification code of the portable device is transmitted only at one first time. However, since locking is performed even if the identification code of the portable device cannot be received outside the boundary region, there is no problem, but a normal answer signal may be transmitted once for every predetermined number of times. Further, the portable device may transmit the identification signal of the portable device two or three times as well as one time.

In addition, the locking operation in the case where a user separates away from a vehicle has been described hitherto. However, in a case where a user approaches a vehicle, a request signal is transmitted only from an antenna provided in a door handle by pushing a switch (not shown) provided in the vehicle, a portable device transmits an answer signal including the identification code of the portable device according to the request signal, and if authentication is established, doors is unlocked.

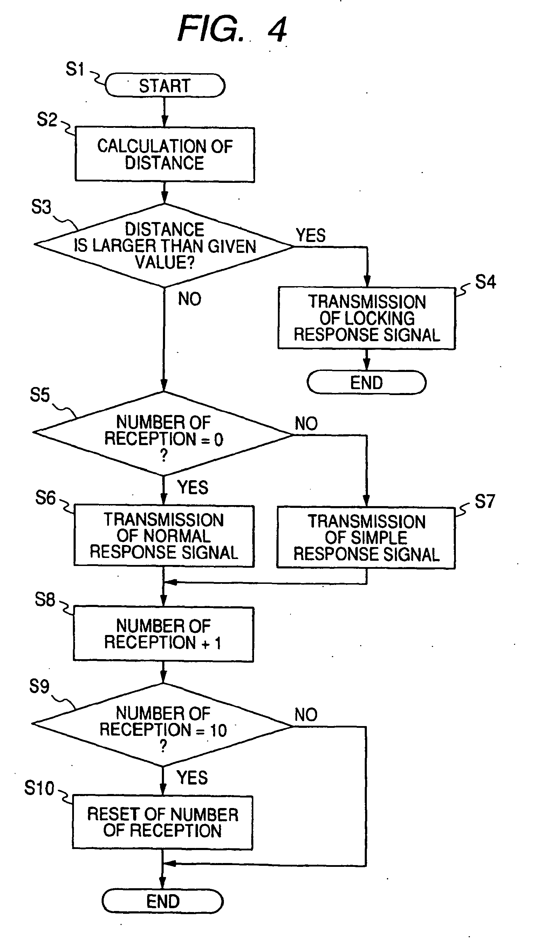

Next, an embodiment of the invention will be described. A passive keyless entry system of the embodiment of the invention is the same as that shown in Figs. 1 and 2 in terms of the schematic view and block diagram of the configuration thereof. Since the embodiment of the invention is different from the embodiment, which is not part of the claimed invention, in the operation when the portable device 5 has received a request signal, only the difference will be described herein with reference to a flow chart. The flow chart in this case is shown in Fig. 4.

This flow chart is the same as that of the embodiment, which is not part of the claimed invention, in that it first begins from a point of time (S1) when the portable device 5 has received a request signal from the vehicle-side device 2. Next, the portable device control unit 20 calculates a distance from the vehicle 1 on the basis of the intensity of the request signal (S2).

Subsequently, the portable device control unit 20 determines whether or not the distance calculated in S2 is more than a predetermined value (S3). Here, if the distance is more than a predetermined value or a predetermined value or more, it is determined that the portable device 5 is sufficiently separated from the vehicle 1, a locking answer signal that is obtained by adding the information of instructing locking to a normal answer signal is transmitted to the portable device transmission unit 22 as an answer signal (S4), and then the flow is ended as it is. If the vehicle-side device 2 receives a locking answer signal, the control unit 10 performs authentication according to an identification code unique to the portable device 5, and makes the lock driving unit 14 lock the door 1a.

If the distance is a predetermined value or less or less than a predetermined value in S3, the portable device control unit 20 determines whether or not the number of times of reception stored in the memory is 0 by referring to the memory 21 (S5). The case where the number of times of reception is 0 includes a case where the portable device 5 has received a request signal first, and a case where the portable device has received a request signal immediately after the number of times of reception is reset to 0 will be described later.

Here, if the number of times of reception stored in the memory 21 was 0, the portable device control unit 20 transmits a normal answer signal to the portable device transmission unit 22 as an answer signal (S6). The operation of the vehicle-side device 2 when the normal answer signal has been received is the same as that of the embodiment, which is not part of the claimed invention. On the other hand, if the number of times of reception is not 0, the portable device control unit 20 transmits a simple answer signal to the portable device transmission unit 22 as an answer signal (S7).

When the normal answer signal or the simple answer signal has been transmitted as an answer signal, the portable device control unit 20 adds one to the number of times of reception stored in the memory 21, and makes the result stored in the memory (S8). Next, the portable device control unit 20 determines whether or not the number of times of reception stored in the memory is ten (10) by referring to the memory 21 (S9). If the number of times of reception is 10, the number of times of reception of the memory 21 is reset to 0 (S10), and if the number of times of reception is not 10, the process is ended as it is. Accordingly, since the number of times of reception is reset whenever request signals are received 10 times, and, the next time, it is determined in S5 that the number of times of reception is 0, a normal answer signal is transmitted, and thereafter, simple answer signals are transmitted until the number of times of reception is set to 10. That is, a normal answer signal is transmitted once for every 10 times, and simple answer signals that are shorter than the normal answer signal are transmitted over the remaining 9 times. Accordingly, the electric power in the portable device 5 for transmitting an answer signal can be reduced, and consumption of a battery can be suppressed.

Further, if the intensity of the portable device 5 to the vehicle 1 is a predetermined value or more, or is more than a predetermined value in S3, a locking answer signal is transmitted immediately. Thus, even if the intervals at which normal answer signals are transmitted as answer signals from the portable device 5 becomes long, if the portable device is a predetermined distance away from the vehicle 1, locking can be made immediately and excellent responsiveness can also be ensured. In addition, even as for the intensity in this case, similarly to the above description, a sum may be taken by squaring a maximum value or mean value of the intensity data transmitted from the individual antennas, or differences between the intensity data, the square root of this sum may be taken, etc.

Furthermore, in the vehicle-side device 2, if it becomes impossible to receive an answer signal from the portable device 5, it is determined that the portable device 5 is separated from the vehicle 1 and the door 1a will be locked. Here, a case where an answer signal cannot be received may occur even when communication between the portable device 5 and the vehicle-side device 2 is poor due to existence of shielding objects, etc., and may occur even when the battery of the portable device 5 is run out. Therefore, in these cases, unintended locking may be performed. However, in the present embodiment, the predetermined value of the distance to be determined in S3 is set to be shorter (for example, the predetermined value of the distance to be determined shall be 2 m if the communicable distance is 2.5 m) than a communicable distance between the portable device 5 and the vehicle-side device 2. If the distance between the portable device 5 and the vehicle-side device 2 is a predetermined value or more, or is more than a predetermined value, a locking answer signal is transmitted immediately. That is, since locking is performed if authentication is possible, and a portable device is located farther than a predetermined distance rather than locking is performed if authentication is impossible, it is possible to prevent occurrence of situations where unintended locking is performed due to poor communication, and the portable device 5 is trapped.

In the present embodiment, a normal answer signal is transmitted as an answer signal once for 10 times. However, it is possible to properly set whether a normal answer signal is transmitted once for any number of times. Further, although simple answer signals are transmitted at any times other than when the normal answer signal is transmitted from the portable device 5, any signal may be not transmitted. In this case, although existence of the portable device 5 cannot be confirmed by the vehicle-side device 2 at any times other than when the normal answer signal is transmitted, consumption of a battery of the portable device 5, on the other hand, can be further suppressed.

Furthermore, in the present embodiment, the number of times of reception is counted and the content of an answer signal is changed on the basis of the number of counts. However, a normal answer signal may be transmitted as an answer signal, once for predetermined time using a timer.

Furthermore, Steps S3 and S4 of the present embodiment of the invention are added to the flow of the embodiment, which is not part of the claimed invention, and if the distance of the portable device 5 and the vehicle 1 is a predetermined value or more, or is more than a predetermined value, a locking answer signal may be transmitted immediately. In this case, Steps S3 and S4 of Fig. 4 may be added before Step S3 of Fig. 3.

Although the embodiments of the invention have been described hitherto, the invention is not limited to the above embodiments in its application, and may be applied variously within the scope of the technical idea of the invention. In the present embodiment, a simple answer signal is constituted by a signal including an identification code unique to the vehicle 1. However, the invention is not limited, and a signal that is shorter than a normal answer signal including an identification code unique to the portable device 5, and that can be distinguished from a noise may be adopted. For example, a signal that repeats a single pulse the number of predetermined times, a single pulse signal having a predetermined time length, etc. may be adopted.

Further, in the embodiments, a plurality of antennas are provided. However, for example, determination of the portable device may be made by the intensity data of a received signal from one antenna provided in a door at a driver's seat, etc.

Further, in the embodiments, whether or not a simple answer signal is transmitted according to the intensity data received by the portable device 5 is determined by the portable device control unit 20. However, a variation may be obtained according to the absolute position of a portable device specified on the vehicle side, and accordingly, the information on whether a simple answer signal is transmitted a portable device or a normal answer signal is transmitted thereto may be included in a request signal, and may be transmitted.

## Claims

1. A passive keyless entry system transmitting a request signal at a predetermined time period from a vehicle-side device provided in a vehicle, transmitting an answer signal in a predetermined case when a portable device has received the request signal, and comprising a control unit that performs predetermined control if the answer signal is received or not received by the vehicle-side device, wherein the portable device includes a portable device control unit that detects the intensity of the request signal transmitted from the vehicle-side device,
**characterized in that** the portable device control unit calculates a distance between the portable device and the vehicle using the received request signal, adds, when the distance is equal to or shorter than a predetermined value or is shorter than the predetermined value, one to the number of times the request signal is received, the number of times the request signal is received being stored in a memory that is provided in the portable device, and transmits, when the number of times the request signal is received reaches a predetermined number of times, a normal answer signal as the answer signal.

2. The passive keyless entry system according to Claim 1,
wherein the portable device control unit does not transmit the answer signal at any times other than when the normal answer signal is transmitted upon reception of the request signal.

3. The passive keyless entry system according to Claim 1 or 2,
wherein the portable device control unit transmits a simple answer signal, which is shorter than the normal answer signal, as the answer signal at any times other than the normal answer signal is transmitted, upon reception of the request signal.

4. The passive keyless entry system according to one Claims 1-3,
wherein, if the distance from the vehicle detected on the basis of the request signal is a predetermined value or more, of is more than a predetermined value, the portable device control unit immediately transmits a signal including information on such content.

## Patentansprüche

1. Passives schlüsselloses Zugangssystem, welches in einem vorgegebenen Zeitraum ein Anforderungssignal von einem fahrzeugseitgen Gerät, das in einem Fahrzeug vorhanden ist, überträgt, in einem vorgegebenen Fall, wenn ein portables Gerät das Anforderungssignal empfangen hat, ein Antwortsignal überträgt, und eine Steuereinheit aufweist, die eine vorgegebene Steuerung ausführt, wenn das Antwortsignal durch das fahrzeugseitige Gerät empfangen oder nicht empfangen wird,
wobei das portable Gerät eine Steuereinheit des portablen Geräts enthält, welche die Intensität des Anforderungssignals, dass von dem fahrzeugseitigen Gerät übertragen worden ist, erkennt,
**dadurch gekennzeichnet, dass** die Steuereinheit des portablen Geräts einen Abstand zwischen dem portablen Gerät und dem Fahrzeug unter Benutzung des empfangenen Anforderungssignals berechnet, eins zu der Anzahl an Zeitpunkten, an denen das Anforderungssignal empfangen worden ist, hinzuzählt, wenn der Abstand gleich oder kürzer als ein vorgegebener Wert oder kürzer als der vorgegebene Wert ist, wobei die Anzahl der Zeitpunkte, an denen das Anforderungssignal empfangen worden ist, in einem Speicher, der in dem portablen Gerät vorgesehen ist, gespeichert wird, und ein normales Antwortsignal als Antwortsignal überträgt, wenn die Anzahl an Zeitpunkten, an denen das Anforderungssignal empfangen worden ist, eine vorgegebene Anzahl von Zeitpunkten erreicht.

2. Passives schlüsselloses Zugangssystem nach Anspruch 1, wobei Steuereinheit des portablen Geräts das Antwortsignal zu keinem Zeitpunkt überträgt, außer wenn in Reaktion auf den Empfang des Anforderungssignals das normale Antwortsignal übertragen wird.

3. Passives schlüsselloses Zugangssystem nach Anspruch 1 oder 2, wobei die Steuereinheit des portablen Geräts als Antwortsignal zu allen Zeitpunkten außer denen, an denen das normale Antwortsignal übertragen wird, in Reaktion auf den Empfang des Anforderungssignals ein einfaches Antwortsignal überträgt, welches kürzer als das normale Antwortsignal ist.

4. Passives schlüsselloses Zugangssystem nach einem der Ansprüche 1 bis 3, wobei die Steuereinheit des portablen Geräts, wenn der auf der Basis des Anforderungssignals erkannte Abstand von dem Fahrzeug gleich oder größer als ein vorgegebener Wert ist, sofort ein Signal überträgt, das Information über einen solchen Inhalt enthält.

## Revendications

1. Système passif d'entrée sans clef, émettant un signal de demande à un instant prédéterminé depuis un dispositif du côté véhicule, disposé dans un véhicule, émettant un signal de réponse dans un cas prédéterminé où un dispositif portatif a reçu le signal de demande, et comprenant une unité de commande qui exécute une commande prédéterminée si le signal de réponse est reçu ou n'est pas reçu par le dispositif du côté véhicule,
dans lequel le dispositif portatif comporte une unité de commande de dispositif portatif qui détecte l'intensité du signal de demande émis depuis le dispositif du côté véhicule,
**caractérisé en ce que** l'unité de commande de dispositif portatif calcule, à l'aide du signal de demande reçu, une distance entre le dispositif portatif et le véhicule, ajoute, quand la distance est égale ou inférieure à une valeur prédéterminée ou est inférieure à la valeur prédéterminée, un au nombre de fois où le signal de demande est reçu, le nombre de fois où le signal de demande est reçu étant stocké dans une mémoire présente dans le dispositif portatif, et émet comme signal de réponse un signal de réponse normal quand le nombre de fois où le signal de demande est reçu atteint un nombre de fois prédéterminé.

2. Système passif d'entrée sans clef selon la revendication 1,
dans lequel l'unité de commande de dispositif portatif émet le signal de réponse à nul instant autre que celui de l'émission du signal de réponse normal à la réception du signal de demande.

3. Système passif d'entrée sans clef selon la revendication 1,
dans lequel l'unité de commande de dispositif portatif émet comme signal de réponse un signal de réponse simple, plus court que le signal de réponse normal, à tout instant autre que celui de l'émission du signal de réponse normal, à la réception du signal de demande.

4. Système passif d'entrée sans clef selon l'une quelconque des revendications 1 à 3,
dans lequel, si la distance par rapport au véhicule, détectée d'après le signal de demande, est égale ou supérieure à une valeur prédéterminée, ou est supérieure à une valeur prédéterminée, l'unité de commande de dispositif portatif émet immédiatement un signal contenant des informations sur ce contenu.
